# EUROPÄISCHE PATENTANMELDUNG

(11) **EP 4 810 222 A1**
(43) Veröffentlichungstag der Anmeldung: **23.09.2026**
(21) Anmeldenummer: 25164905.9
(22) Anmeldetag: 20.03.2025
(51) Int. Cl.: B29C 44/12, A47C 7/18, B29C 44/14, B29C 44/06, B29C 44/36, B29K 75/00, B29L 31/58

(54) **VERFAHREN ZUR HERSTELLUNG EINES GEPOLSTERTEN MÖBELTEILS, GEPOLSTERTES MÖBELTEIL UND MÖBEL**

(71) Anmelder: Interstuhl Büromöbel GmbH & Co. KG, 72469 Messstetten (DE)
(72) Erfinder: Link, Joachim, 72469 Meßstetten (DE)
(74) Vertreter: Kohler Schmid Möbus Patentanwälte

(57) **Zusammenfassung**

Die Erfindung betrifft ein Verfahren zur Herstellung eines gepolsterten Möbelteils (14) mit den Verfahrensschritten:
a. Aufbringen einer flüssigen Oberflächenschicht (16) auf eine Form (10), wobei die Oberflächenschicht (16) die Oberfläche des herzustellenden Möbelteils (14) bildet,
b. Verstärken der Oberflächenschicht (16), indem eine Verstärkungsschicht (18) auf die in der Form (10) angeordnete Oberflächenschicht (16) aufgebracht wird,
c. Hinterschäumen der Verstärkungsschicht (18) mit einem Schaum, insbesondere Polyurethanschaum, zur Ausbildung einer Schaumschicht (20).

## Beschreibung

Die Erfindung betrifft ein Verfahren zur Herstellung eines gepolsterten Möbelteils sowie ein gemäß dem erfindungsgemäßen Verfahren hergestelltes Möbelteil. Außerdem betrifft die Erfindung ein Möbel mit einem erfindungsgemäßen Möbelteil.

Es sind Möbel, wie beispielsweise Sitzmöbel, bekannt, die gepolsterte Möbelteile aufweisen. Beispielsweise kann eine Sitzfläche oder eine Rückenlehne beispielsweise eines Stuhls gepolstert sein. Dabei ist es bekannt, zur Herstellung eines solchen gepolsterten Möbelteils eine vorgefertigte Oberflächenschicht, beispielsweise Kunstleder, in eine Werkzeugform einzulegen und anschließend zu hinterschäumen. Dabei muss die Oberflächenschicht etwas größer sein, als die Werkzeugform und anschließend, nach dem Hinterschäumen, zurechtgeschnitten werden. Dabei entsteht Abfall. Außerdem sind zusätzliche Arbeitsschritte nach dem Hinterschäumen notwendig. Die gemäß dem genannten Verfahren hergestellten gepolsterten Möbelteile sind mitunter unkomfortabel, da die Stauchhärte aufgrund der unterschiedlichen Materialeigenschaften der Oberflächenschicht und des Schaums schwierig einzustellen ist.

Aufgabe der vorliegenden Erfindung ist es, ein Verfahren bereitzustellen, mit dem ein gepolstertes Möbelteil möglichst abfallfrei hergestellt werden kann und die Eigenschaften des Möbelteils während der Herstellung eingestellt werden können.

Gelöst wird diese Aufgabe erfindungsgemäß durch ein Verfahren zur Herstellung eines gepolsterten Möbelteils mit den Verfahrensschritten:
a. Aufbringen einer flüssigen Oberflächenschicht auf eine Form, wobei die Oberflächenschicht die Oberfläche des herzustellenden Möbelteils bildet,
b. Verstärken der Oberflächenschicht, indem eine Verstärkungsschicht auf die in der Form angeordnete Oberflächenschicht aufgebracht wird,
c. Hinterschäumen der Verstärkungsschicht mit einem Schaum, insbesondere Polyurethanschaum, zur Ausbildung einer Schaumschicht.

Dabei bildet die Schaumschicht das eigentliche Polster des gepolsterten Möbelteils. Allerdings kann auch die Verstärkungsschicht bereits dämpfende Eigenschaften aufweisen. Das erfindungsgemäße gepolsterte Möbelteil kann insbesondere in einem sogenannten In-Mould Coating Verfahren hergestellt werden. Die Oberflächenschicht kann in unterschiedlichen Farben hergestellt werden. Es ist auch denkbar, die Oberflächenschicht mehrfarbig auszugestalten. Die genannten Schichten verbleiben bis zur Herstellung der letzten Schicht, insbesondere der Schaumschicht, in der Form. Dadurch, dass die Oberflächenschicht auf die Form aufgebracht wird, ist es möglich, beispielsweise nur eine Ausnehmung in der Form zu beschichten. Die Oberflächenschicht steht anschießend nicht über die Verstärkungsschicht oder die Schaumschicht über und muss daher nachträglich nicht nachgeschnitten und konfektioniert werden.

Die Oberflächenschicht kann eine Struktur aufweisen. Die Struktur kann dadurch geschaffen werden, dass die Form strukturiert ist und insbesondere ein Negativ der herzustellenden Oberfläche des Möbelteils darstellt.

Besondere Vorteile ergeben sich, wenn die Schichten in einem Sprühverfahren aufgebracht werden. In einem Sprühverfahren können die Materialschichten besonders gleichmäßig mit einer gleichmäßigen Materialschichtstärke aufgebracht werden. Außerdem ist es möglich, die drei Schichten in einem unterbrechungsfreien Prozess herzustellen.

Durch die Wahl des Materials für die Oberflächenschicht können die Eigenschaften der Oberflächenschicht eingestellt werden. Beispielsweise kann ein Lack als Oberflächenschicht auf die Form aufgebracht werden. Ein gepolstertes Möbelteil, welches einen Lack als Oberflächenschicht aufweist, lässt sich besonders gut reinigen.

Weitere Vorteile ergeben sich, wenn als Oberflächenschicht eine aliphatische Farb- oder Lackschicht aufgebracht wird. Eine solche Oberflächenschicht ist besonders UV-beständig. In die Oberflächenschicht können elektrisch leitfähige Partikel eingebracht werden. Dadurch kann ein gepolstertes Möbelteil hergestellt werden, welches einen ESD-Schutz (Electrostatic Discharge) darstellt bzw. in einem ESD-Schutzkonzept zum Einsatz kommen kann. Ein solches gepolstertes Möbelteil kann beispielsweise in einem Reinraum eingesetzt werden.

Der Vorteil des erfindungsgemäßen Verfahrens liegt auch darin, dass die Oberflächenschicht undurchlässig für Partikel ausgestaltet werden kann, sodass beispielsweise keine Partikel aus den unter der Oberflächenschicht liegenden Schichten nach außen gelangen können. Somit kann der Einsatz in einem Reinraum ermöglicht werden. Außerdem kann eine besonders robuste und extrem einfach zu säubernde Oberflächenschicht geschaffen werden. Die Oberflächenschicht kann, insbesondere bei einer Ausgestaltung als Lack, mit Desinfektionsmitteln behandelt werden, ohne dass die Oberflächenschicht beeinträchtigt wird. Die Schaumschicht kann in einer Dicke hergestellt werden, die ein langes Sitzen ermöglicht, wenn das gepolsterte Möbelteil im Bereich einer Sitzfläche eines Möbels eingesetzt wird. Die Verstärkungsschicht kann aus Polyol und Isocyanat hergestellt werden. Durch ein geeignetes Mischungsverhältnis von Polyol und Isocyanat kann eine Polyurethan-Sprühhaut als Verstärkungsschicht geschaffen werden. Die Verstärkungsschicht kann insbesondere aromatisches Polyurethan aufweisen.

Die Oberflächenschicht, die Verstärkungsschicht und die Schaumschicht können nacheinander nass-in-nass aufgebracht werden. Somit kann das gepolsterte Möbelteil in einem kontinuierlichen Prozess hergestellt werden. Wenn die Schichten in einem Sprühverfahren aufgebracht werden, kann durch geeignete Zusammensetzung der Sprühmaterialien und durch die Dauer des jeweiligen Prozessschrittes beeinflusst werden, welche Schicht in welcher Stärke aufgebracht wird.

Bei dem erfindungsgemäßen Verfahren ist es insbesondere nicht notwendig, Trockenzeiten zwischen der Herstellung einzelner Schichten abzuwarten. Auch ist es nicht notwendig, ein teilweise gefertigtes gepolstertes Möbelteil der Form zu entnehmen und an einer anderen Station fertigzustellen. Die Herstellung des gepolsterten Möbelteils erweist sich damit als besonders ökonomisch.

Eine vorgegebene Stauchhärte der Schaumschicht kann durch das Mischungsverhältnis von Polyol und Isocyanat bei der Herstellung der Schaumschicht eingestellt werden. Je nachdem, an welcher Stelle eines Möbels das gepolsterte Möbelteil eingesetzt werden kann, können Schaumschichten mit unterschiedlichen Parametern hergestellt werden. Insbesondere kann die Stauchhärte und Dicke der Schaumschicht eingestellt werden. So ist beispielsweise bei der Verwendung des gepolsterten Möbelteils als Sitz eines Stuhls eine dickere Schaumschicht sinnvoll, als bei der Verwendung des gepolsterten Möbelteils bei einer Armlehne, Nackenstütze oder Kopfstütze eines Stuhls.

Beim Hinterschäumen der Verstärkungsschicht kann ein Befestigungselement in die Schaumschicht integriert werden. Wenn beispielsweise das gepolsterte Möbelteil im Bereich einer Stuhllehne eingesetzt werden soll und an der Lehne oder einem Lehnenträger befestigt werden soll, ist es hilfreich, wenn bereits ein Befestigungsmittel, wie beispielsweise eine Platte, mit deren Hilfe das gepolsterte Möbelteil mit einem Lehnenträger verschraubt werden kann, bereits vorhanden ist.

In den Rahmen der Erfindung fällt außerdem ein Möbelteil mit einer Oberflächenschicht, einer Verstärkungsschicht und einer Schaumschicht, welches im erfindungsgemäßen Verfahren hergestellt wurde.

Die Oberflächenschicht kann dünner sein als die Verstärkungsschicht und die Verstärkungsschicht kann dünner sein als die Schaumschicht. Durch die Wahl der Dicke der einzelnen Schichten können die Eigenschaften des Möbelteils eingestellt werden. Insbesondere kann durch die Verwendung einer sehr dünnen Oberflächenschicht in Verbindung mit einer Verstärkungsschicht eine besondere Haptik erzeugt werden. Beispielsweise kann dadurch ein Kunstleder nachgebildet werden.

Die Oberflächenschicht kann strukturiert sein. Die Strukturierung kann dadurch erfolgen, dass die Oberflächenschicht in eine entsprechend strukturierte Form eingebracht wird. Durch die Strukturierung der Oberflächenschicht kann die Optik und Haptik des Möbelteils eingestellt werden.

Das Möbelteil kann insbesondere PVC-frei und/oder lösemittelfrei ausgebildet sein. Somit weist das Möbelteil niedrige Emissionswerte auf.

Die Oberflächenschicht kann elektrisch leitfähig sein. Somit können ESD-Kriterien erfüllt werden. Ein Möbelteil mit einer solchen Oberflächenschicht kann an Möbeln eingesetzt werden, die in Bereichen verwendet werden, wo keine elektrostatische Aufladung vorkommen darf.

In den Rahmen der Erfindung fällt außerdem ein Möbel mit einem erfindungsgemäßen Möbelteil. Das erfindungsgemäße Möbelteil kann insbesondere Bestandteil einer Armlehne, einer Rückenlehne, eines Sitzes, einer Kopfstütze oder einer Nackenstütze sein.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: ein in einer Form hergestelltes gepolstertes Möbelteil;
- Fig. 2: das fertiggestellte Möbelteil.

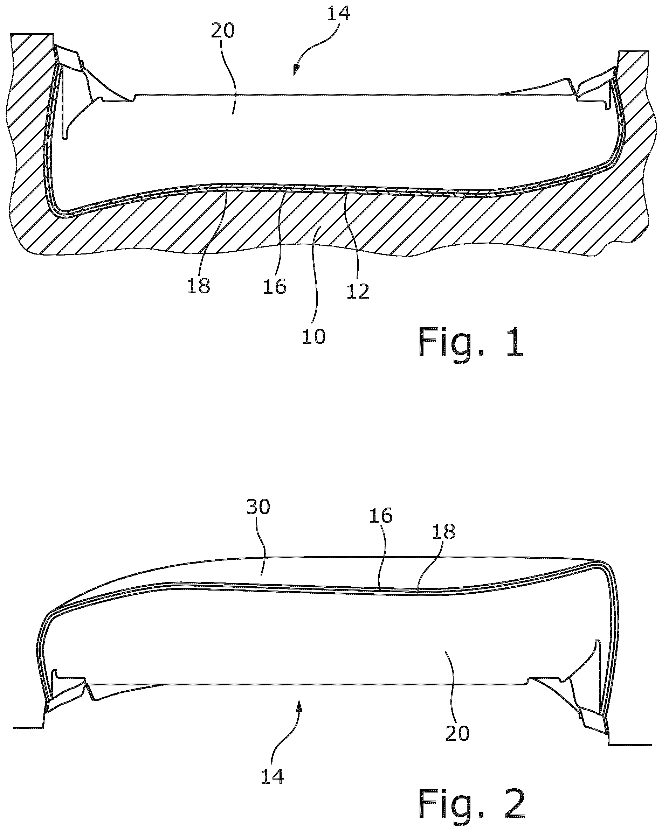

Die Figur 1 zeigt eine Form 10, insbesondere Werkzeugform, die eine Ausnehmung 12 aufweist. Durch die Ausnehmung 12 der Form 10 wird die Gestalt eines herzustellenden gepolsterten Möbelteils 14 bestimmt. In einem ersten Schritt wird eine Oberflächenschicht 16 auf die Form 10, insbesondere die Oberfläche der Ausnehmung 12, aufgebracht. Insbesondere kann dabei die Oberflächenschicht 16 in einem Sprühverfahren aufgebracht werden. Bei der Oberflächenschicht 16 kann es sich um einen Lack handeln, der auf die Form 10 aufgebracht wird. Durch das Aufsprühen kann die Schichtdicke der Oberflächenschicht 16 besonders gut eingestellt werden. Im Anschluss wird eine Verstärkungsschicht 18 auf die Oberflächenschicht 16 aufgebracht. Die Verstärkungsschicht 18 ist dicker ausgebildet, als die Oberflächenschicht 16 und fixiert die Gestalt der Oberflächenschicht 16. Auch die Verstärkungsschicht 16 kann in einem Sprühverfahren aufgebracht werden, wobei die Parameter für die Materialzusammensetzung gegenüber dem Aufbringen der Oberflächenschicht verändert wurden. Im Anschluss daran wird eine Schaumschicht 20 auf die Verstärkungsschicht 16 aufgebracht. Die Schaumschicht 20 ist deutlich dicker als die beiden anderen Schichten 16, 18. Durch Wahl der Materialzusammensetzung der Schaumschicht 20, durch die die Verstärkungsschicht 18 hinterschäumt wird, kann die Stauchhärte des Möbelteils 14 eingestellt werden. Auch die Schaumschicht 20 kann in einem Sprühverfahren aufgebracht werden. In einem Sprühverfahren können Bereiche unterschiedlicher Dicke hergestellt werden. Insbesondere ist zu erkennen, dass im Randbereich die Schaumschicht 20 des Möbelteils 14 eine andere Dicke aufweist, als in einem zentralen Bereich.

Das fertig hergestellte gepolsterte Möbelteil 14 kann im Anschluss aus der Form 10 entnommen werden. Es ist keine weitere nachträgliche Bearbeitung oder Konfektionierung notwendig.

Das fertig hergestellte gepolsterte Möbelteil 14 ist in der Figur 2 dargestellt. Bei dem in Figur 2 dargestellten gepolsterten Möbelteil handelt es sich um eine Sitzfläche eines Stuhls. Hier ist zu erkennen, dass die Oberseite 30 der Sitzfläche in einem zentralen Bereich tiefer liegt, als in einem Randbereich. Diese Gestalt kann durch entsprechende Ausgestaltung der Form 10, insbesondere deren Ausnehmung 12, realisiert werden. Die Oberseite 30 des Möbelteils 14 kann strukturiert sein. Diese Struktur kann durch entsprechende Oberflächengestaltung der Ausnehmung 12 vorgegeben werden.

## Patentansprüche

1. Verfahren zur Herstellung eines gepolsterten Möbelteils (14) mit den Verfahrensschritten:
a. Aufbringen einer flüssigen Oberflächenschicht (16) auf eine Form (10), wobei die Oberflächenschicht (16) die Oberfläche des herzustellenden Möbelteils (14) bildet,
b. Verstärken der Oberflächenschicht (16), indem eine Verstärkungsschicht (18) auf die in der Form (10) angeordnete Oberflächenschicht (16) aufgebracht wird,
c. Hinterschäumen der Verstärkungsschicht (18) mit einem Schaum, insbesondere Polyurethanschaum, zur Ausbildung einer Schaumschicht (20).

2. Verfahren nach Anspruch 1, **dadurch gekennzeichnet, dass** die Schichten im Sprühverfahren aufgebracht werden.

3. Verfahren nach einem der vorhergehenden Ansprüche, **dadurch gekennzeichnet, dass** ein Lack als Oberflächenschicht (16) auf die Form aufgebracht wird.

4. Verfahren nach einem der vorhergehenden Ansprüche, **dadurch gekennzeichnet, dass** als Oberflächenschicht (16) eine aliphatische Farb- oder Lackschicht aufgebracht wird.

5. Verfahren nach einem der vorhergehenden Ansprüche, **dadurch gekennzeichnet, dass** in die Oberflächenschicht (16) elektrisch leitfähige Partikel eingebracht werden.

6. Verfahren nach einem der vorhergehenden Ansprüche, **dadurch gekennzeichnet, dass** die Verstärkungsschicht (18) aus Polyol und Isocyanat hergestellt wird.

7. Verfahren nach einem der vorhergehenden Ansprüche, **dadurch gekennzeichnet, dass** die Oberflächenschicht (16), die Verstärkungsschicht (18) und die Schaumschicht (20) nacheinander nass-in-nass aufgebracht werden.

8. Verfahren nach einem der vorhergehenden Ansprüche, **dadurch gekennzeichnet, dass** eine vorgegebene Stauchhärte der Schaumschicht (20) durch das Mischungsverhältnis von Polyol und Isocyanat bei der Herstellung der Schaumschicht (20) eingestellt wird.

9. Verfahren nach einem der vorhergehenden Ansprüche, **dadurch gekennzeichnet, dass** beim Hinterschäumen der Verstärkungsschicht (18) ein Befestigungselement in die Schaumschicht (20) integriert wird.

10. Möbelteil (14) mit einer Oberflächenschicht (16), einer Verstärkungsschicht (18) und einer Schaumschicht (20), hergestellt nach einem der vorhergehenden Ansprüche.

11. Möbelteil nach Anspruch 10, **dadurch gekennzeichnet, dass** die Oberflächenschicht (16) dünner ist als die Verstärkungsschicht (18) und die Verstärkungsschicht (18) dünner ist als die Schaumschicht (20).

12. Möbelteil nach einem der vorhergehenden Ansprüche 10 oder 11, **dadurch gekennzeichnet, dass** die Oberflächenschicht (16) strukturiert ist.

13. Möbelteil nach einem der vorhergehenden Ansprüche 10 bis 12, **dadurch gekennzeichnet, dass** es PVC-frei und/oder lösemittelfrei ausgebildet ist.

14. Möbelteil nach einem der vorhergehenden Ansprüche 10 bis 13, **dadurch gekennzeichnet, dass** die Oberflächenschicht (16) elektrisch leitfähig ist.

15. Möbel, insbesondere Sitzmöbel, mit einem Möbelteil (14) nach einem der Ansprüche 9 bis 14.

## Geänderte Patentansprüche

### Geänderte Patentansprüche gemäss Regel 137(2) EPÜ.

1. Verfahren zur Herstellung eines gepolsterten Möbelteils (14) mit den Verfahrensschritten:
a. Aufbringen einer flüssigen Oberflächenschicht (16) auf eine Form (10), wobei die Oberflächenschicht (16) die Oberfläche des herzustellenden Möbelteils (14) bildet,
b. Verstärken der Oberflächenschicht (16), indem eine Verstärkungsschicht (18) auf die in der Form (10) angeordnete Oberflächenschicht (16) aufgebracht wird,
c. Hinterschäumen der Verstärkungsschicht (18) mit einem Schaum, insbesondere Polyurethanschaum, zur Ausbildung einer Schaumschicht (20), **dadurch gekennzeichnet, dass**
d. die Oberflächenschicht (16), die Verstärkungsschicht (18) und die Schaumschicht (20) nacheinander nass-in-nass aufgebracht werden.

2. Verfahren nach Anspruch 1, **dadurch gekennzeichnet, dass** die Schichten im Sprühverfahren aufgebracht werden.

3. Verfahren nach einem der vorhergehenden Ansprüche, **dadurch gekennzeichnet, dass** ein Lack als Oberflächenschicht (16) auf die Form aufgebracht wird.

4. Verfahren nach einem der vorhergehenden Ansprüche, **dadurch gekennzeichnet, dass** als Oberflächenschicht (16) eine aliphatische Farb- oder Lackschicht aufgebracht wird.

5. Verfahren nach einem der vorhergehenden Ansprüche, **dadurch gekennzeichnet, dass** in die Oberflächenschicht (16) elektrisch leitfähige Partikel eingebracht werden.

6. Verfahren nach einem der vorhergehenden Ansprüche, **dadurch gekennzeichnet, dass** die Verstärkungsschicht (18) aus Polyol und Isocyanat hergestellt wird.

7. Verfahren nach einem der vorhergehenden Ansprüche, **dadurch gekennzeichnet, dass** eine vorgegebene Stauchhärte der Schaumschicht (20) durch das Mischungsverhältnis von Polyol und Isocyanat bei der Herstellung der Schaumschicht (20) eingestellt wird.

8. Verfahren nach einem der vorhergehenden Ansprüche, **dadurch gekennzeichnet, dass** beim Hinterschäumen der
Verstärkungsschicht (18) ein Befestigungselement in die Schaumschicht (20) integriert wird.

9. Möbelteil (14) mit einer Oberflächenschicht (16), einer Verstärkungsschicht (18) und einer Schaumschicht (20), hergestellt nach einem der vorhergehenden Ansprüche.

10. Möbelteil nach Anspruch 9, **dadurch gekennzeichnet, dass** die Oberflächenschicht (16) dünner ist als die Verstärkungsschicht (18) und die Verstärkungsschicht (18) dünner ist als die Schaumschicht (20).

11. Möbelteil nach einem der vorhergehenden Ansprüche 9 oder 10,
**dadurch gekennzeichnet, dass** die Oberflächenschicht (16) strukturiert ist.

12. Möbelteil nach einem der vorhergehenden Ansprüche 9 bis 11, **dadurch gekennzeichnet, dass** es PVC-frei und/oder lösemittelfrei ausgebildet ist.

13. Möbelteil nach einem der vorhergehenden Ansprüche 9 bis 12, **dadurch gekennzeichnet, dass** die Oberflächenschicht (16) elektrisch leitfähig ist.

14. Möbel, insbesondere Sitzmöbel, mit einem Möbelteil (14) nach einem der Ansprüche 8 bis 13.
